(19) Europäisches Patentamt
European Patent Office
Office européen des brevets

(11) **EP 2 108 579 A1**

(12) **EUROPEAN PATENT APPLICATION**

(43) Date of publication:
**14.10.2009 Bulletin 2009/42**

(51) Int Cl.:
**B62M 9/10** (2006.01)

(21) Application number: **08425244.4**

(22) Date of filing: **10.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **CAMPAGNOLO S.r.l.**
**36100 Vicenza (VI) (IT)**

(72) Inventor: **Valle, Maurizio**
**36100 Vicenza (IT)**

(74) Representative: **Checcacci, Giorgio et al**
**Porta, Checcacci & Associati S.p.A.**
**Via Trebbia 20**
**20135 Milano (IT)**

(54) **Toothed wheel and group of toothed wheels for a bicycle transmission system**

(57) The toothed wheel comprises at least one gear-shifting helping tooth (A3) the height of which, measured from the bottom of an adjacent groove, decreases in the direction of the pressure flank (30), in any case being greater than or equal to 90% of the radius of a pin (52) of a bicycle chain (15). In a gearshifting sector (18) the distance D between the centre of a groove between two consecutive teeth (A1,A2,A3,A4) of the toothed wheel having smaller diameter and the centre of a groove between two consecutive teeth of the toothed wheel having larger diameter is within the range: $0.85 \cdot N \cdot P \leq D \leq N \cdot P$, in which N is a whole number and P is the pitch of a group (1) of toothed wheels (5,10).

FIG.1

**Description**

The present invention refers to a toothed wheel of a chain transmission system for a bicycle, and to a group of toothed wheels for front and rear bicycle gearshifts.

In the rest of the present description, and in the subsequent claims, the term "sprockets" identifies the toothed wheels of a transmission system for bicycles intended to be coupled with the rear wheel, and the term "crowns" identifies the toothed wheels intended to be coupled with the cranks.

As known, every bicycle transmission system comprises a group of sprockets having different diameters, mounted together and rotating as a unit, on which the transmission chain is engaged, alternately on one of the sprockets of the group according to the transmission ratio to be accomplished. On each sprocket of the group the teeth follow one another at constant distance, or pitch, alternating with grooves; the pitch is equal on the various wheels of the same group of sprockets and corresponds to the pitch of the chain. The chain is run into rotation by the cyclist through the pedals and the front toothed wheels, or crowns, of the bicycle.

Normally, on a bicycle the transmission of motion always takes place the same way, i.e. the chain always has the same versus of motion (at least when it transmits power/torque), and therefore the front crowns and the sprockets always have the same direction of rotation. In other words, the direction of movement of the teeth of the crowns and of the sprockets is always the same. With reference to such a direction of rotation, every tooth has a preceding flank (the one facing forwards with respect to the direction of rotation) and a following flank (the one facing backwards). In front crowns the pressure flank, on which acts the traction force exerted by the chain, is the preceding one; in wheels of a rear gearshift group, the pressure flank is the following one. The flank of a tooth opposite the pressure flank is defined as the idle flank and it does not cooperate with the transmission of torque. In front crowns the idle flank of each tooth is the one following the tooth itself with respect to the direction of rotation of the crown. In rear sprockets, the idle flank of each tooth is the one preceding the tooth itself with respect to the direction of rotation of the sprocket. In general, every tooth also has an extension in the circumferential direction, or width, an extension in the radial direction, or height, and an extension in the axial direction, or thickness.

The movement of the chain disengaging one sprocket and engaging another adjacent sprocket, or else the movement from a first crown to a second front crown, is known as "gearshifting", and is normally obtained by moving the chain transversally with respect to its own longitudinal axis (i.e. axially with respect to the toothed wheel), until it abandons the engagement with one toothed wheel and moves towards the engagement with the adjacent toothed wheel. This movement action is normally obtained with chain guide devices, operated by the cyclist.

If gearshifting occurs starting from a wheel having a larger diameter towards a wheel having a smaller diameter, it is defined as "downward gearshifting"; vice-versa, if it occurs starting from a wheel having a smaller diameter towards a wheel having a larger diameter, it is defined as "upward gearshifting". As known, upward gearshifting on the rear sprockets causes a reduction in the transmission ratio, and vice-versa, downward gearshifting causes an increase in such a ratio. Gearshifting, both upward and downward, is in any case a delicate transition operation, since it occurs when the chain is under tension and since the chain has very limited deformability in the transversal direction (with respect to its longitudinal axis).

The gearshifting steps alternate with the normal operation steps in which the chain engages a single sprocket and a single crown to transmit the torque.

The prior art comprises some provisions to facilitate gearshifting, in particular to facilitate the disengagement of the chain from a sprocket, the movement in the transversal direction and the engagement of the chain in another sprocket.

Patent US 6,139,456 discloses a sprocket provided with two "helping" teeth (11 in figure 1) each having a profile like a fish's fin, obtained by tapering the pressure flank of the tooth. The helping teeth are diametrically opposite and each is preceded, in the direction of rotation of the sprocket, by an auxiliary tooth the height of which is lower than that of the adjacent teeth, but the width of which is greater. On the flank of the sprocket there is a recess that defines a guide surface, which in turn extends at least between each auxiliary tooth and the tooth that precedes it. This configuration improves the disengagement of the chain, with low noise.

Current toothed wheels still have some drawbacks that do not allow a regular transition of the transmission ratio in upward gearshifting. In other words, during gearshifting, i.e. in the time period between the moment at which the chain begins to disengage a toothed wheel and the moment at which the chain successfully engages the adjacent toothed wheel with a larger diameter, there is normally a discontinuity in the transmission of torque. During gearshifting, indeed, the chain can take a position relative to the toothed wheel such that the transmitted torque is less than the initial one. This can be particularly disadvantageous in competition, since it prevents the cyclist from changing transmission ratio whilst still continuing to exert a constant torque on the pedals, for example during a steep climb. Consequently, during gearshifting the cyclist is forced to slow down, and to increase his effort after gearshifting to recover the speed lost.

The technical problem underlining the present invention is to provide a toothed wheel (front crown or rear sprocket), and the relative group of toothed wheels of a bicycle, which facilitate upward gearshifting compared to conventional solutions.

The present invention therefore concerns a toothed wheel for a chain transmission system for bicycles, characterised according to claim 1.

In particular, the invention concerns a toothed wheel for a chain transmission system for a bicycle, intended to be coupled with at least one other toothed wheel in a group of toothed wheels rotating as a unit, comprising a plurality of teeth that follow one another on the radially outer periphery of the toothed wheel, alternating with grooves, wherein each tooth has a thickness, a width and a height and has an idle flank, passive in the transmission of torque with a bicycle chain, and a pressure flank, active in the transmission of torque with the same chain, in which said pressure flank, which extends in the circumferential direction, is concave for the engagement with a pin of the chain, characterised in that it comprises at least one tooth for helping gearshifting the height of which, measured from the bottom of an adjacent groove, decreases in the direction of the pressure flank, in any case being greater than or equal to 90% of the radius of the pin.

The maximum height of the tooth for helping gearshifting is thus less than the height of the adjacent teeth and gradually reduces at the pressure flank of the tooth. In a sprocket the pressure flank of each tooth is the flank following the tooth itself with respect to the direction of rotation of the sprocket. In a crown the pressure flank is the one preceding the tooth with respect to the direction of rotation. This characteristic allows upward gearshifting to be accomplished easier, i.e. it simplifies the movement of the transmission chain towards the engagement with the sprocket or the crown having larger diameter, at the same time ensuring an optimal transmission of torque during normal operation, i.e. before and after gearshifting, without risks of disengagement of the chain.

In the preferred embodiment of the toothed wheel, the gearshifting helping tooth also comprises a top face, preferably convex, which extends in the circumferential direction between an edge, or a vertex, having the maximum height and an edge, or a joining surface with the pressure flank, having the minimum height. In other words the top face of the tooth for helping gearshifting has a substantially circumferential extension, but slightly decreasing towards the pressure flank of the tooth. In this circumstance, the minimum height of the tooth for helping gearshifting, i.e. the height between the bottom of the groove adjacent to the pressure flank and the join between the top face and the pressure flank, is greater than or equal to 90% of the radius of the pin of the chain.

The tooth for helping gearshifting also comprises an outer face perpendicular to the axis of the toothed wheel and intended to face towards the toothed wheel having smaller diameter. The outer face, with the idle flank of the same helping tooth, forms a hooking and radial lifting edge of the transmission chain. This edge has the function of causing the chain to lift towards the top face of the tooth when, during the gearshifting step commanded by the cyclist, a component of the chain interacts with the same lifting edge. In simpler terms, the hooking (and lifting) edge pulls the chain during gearshifting and is also configured like an upward ramp that pushes the transmission chain beyond the top face of the tooth, facilitating the movement of the chain towards the engagement with the toothed wheel having larger diameter.

The hooking edge intersects the top face of the tooth at a vertex of the idle flank, this being the vertex that constitutes the point of the tooth having maximum height. Therefore, the gearshifting helping tooth has maximum height, measured with respect to the bottom of the groove adjacent to the pressure flank, at the intersection between the idle flank, the top face and the outer face.

Preferably, the minimum height of the gearshifting helping tooth, measured between the bottom of the groove adjacent to the pressure flank, and the join between the top face and the pressure flank, is greater than or equal to 2/3 of the maximum height of the same tooth, measured between the bottom of the same groove and the vertex of the idle flank. This geometric relationship allows optimal functionality of the gearshifting helping tooth in terms of the transmission of torque during normal operation and the movement of the chain during gearshifting.

According to a particularly effective embodiment of the sprocket according to the invention, the gearshifting helping tooth also comprises a first bevel formed on the outer face, between the top face and the pressure flank. The depth of the first bevel, with respect to the outer face, increases towards the pressure flank, and is at its maximum at the join between the pressure flank and the top face. The bevel can be flat, but preferably it is defined by a concave surface.

On the inner face of the gearshifting helping tooth, i.e. on the face normally tapered in the radial direction and opposite the outer face, a second bevel is formed. The second bevel extends up to the vertex formed by the intersection between the inner face, the top face and the idle flank. Preferably, the second bevel is defined by a flat triangular surface.

On the taper of the inner face of the gearshifting helping tooth a third bevel is preferably formed that extends until it intersects the pressure flank. In this circumstance, the second bevel and the third bevel intersect one another and both intersect the taper of the inner face and the top face, which however do not intersect one another.

Preferably, the gearshifting helping tooth is next, on the side of the idle flank, to a depressed tooth the maximum height of which is lower than the maximum height of the remaining teeth of the toothed wheel (including the gearshifting helping tooth) and the highest portion of which is proximal to the gearshifting helping tooth.

According to the preferred embodiment of the present invention, the toothed wheel described above is a sprocket.

The present invention, in a second aspect thereof, also concerns a group of toothed wheels for a bicycle chain transmission system, according to claim 15.

In particular, the group of toothed wheels comprises at least one toothed wheel having a smaller diameter and at least one toothed wheel having a larger diameter, fixed with respect to each other and rotatable around a common axis, intended to be selectively engaged by a transmission chain, wherein said toothed wheels comprise, on its own periphery, a plurality of teeth arranged circumferentially and alternating with grooves, each tooth having a thickness, a width and a height and having an idle flank, passive in the transmission of torque with a bicycle chain, and a pressure flank, active in the transmission of torque with the same chain, wherein said toothed wheel having a larger diameter comprises at least one hooking tooth of the transmission chain, suitable for engaging and holding a portion of the transmission chain that, during gearshifting, extends between the toothed wheel having a smaller diameter and the toothed wheel having a larger diameter in a circular sector of the group of toothed wheels, defined as gearshifting sector, and wherein in said gearshifting sector, the distance D between the centre of a groove between two consecutive teeth of the toothed wheel having smaller diameter and the centre of a groove between two consecutive teeth of the toothed wheel having larger diameter is within the range:

$$0.85 \cdot N \cdot P \leq D \leq N \cdot P,$$

in which N is an integer number and P is the pitch of the group of toothed wheels.

At least in the gearshifting sector, the pressure flanks of the teeth, i.e. the flanks intended to interact with a pin of the chain for the transmission of torque, have a portion that has, on a plane perpendicular to the axis of the toothed wheel, a circular profile. For the purposes of the present invention, and with reference to claims 15 to 38, the centre of a groove is defined as the centre of curvature of the pressure flank of the tooth adjacent to the groove itself.

Preferably, at least one of the toothed wheels is a wheel characterised according to claims 1-14. More preferably, N=2 and the toothed wheel having larger diameter has one extra tooth compared to the toothed wheel having smaller diameter.

The group of toothed wheels according to the present invention has various advantages compared to conventional solutions. Firstly, the transmission chain is carried on the side of the wheel having larger diameter, i.e. it is moved axially for the engagement with the toothed wheel having larger diameter, in the smallest possible groove, in practice in the groove of two links of the chain. Secondarily, the angular phase displacement between the homologous teeth of the gearshifting sector of the wheels of the group, a phase displacement that depends upon the distance D indicated above, allows the teeth of the toothed wheel having larger diameter to quickly engage the transmission chain, without the group idling.

The transmission chain is formed by a succession of inner links alternating with outer links. Each outer link consists of a pair of opposite plates facing each other at distance, hinged at their ends, at the inner faces, to a pair of plates that constitute the inner links. The inner links define a gap smaller than the one defined by the outer links, but still sufficient to house a tooth of a toothed wheel. The plates that constitute the inner links are kept separated apart thanks to pins that, during operation, go into abutment on the pressure flanks of the teeth of the wheels.

The group of toothed wheels according to the present invention is effective in both cases in which upward gearshifting occurs at an outer link of the chain, or else occurs at an inner link. By the expression "outer link gearshifting" we mean upward gearshifting in which the first link to undergo a radial lifting with respect to the toothed wheel having smaller diameter, and therefore the first link to disengage the relative tooth, is an outer link. Vice-versa, by the expression "inner link gearshifting" we mean upward gearshifting in which the first link to lift from the toothed wheel having smaller diameter is an inner link of the chain.

Hereafter, the characteristics of the group of toothed wheels that mainly simplify outer link upward gearshifting shall be described.

At least in the gearshifting sector, the toothed wheel having smaller diameter comprises at least one gearshifting helping tooth the height of which, measured from the bottom of the groove adjacent to the pressure flank, decreases in the direction of the pressure flank itself. The height of the gearshifting helping tooth is greater than or equal to 90% the radius of the pin of the transmission chain.

Preferably, the gearshifting helping tooth comprises a convex top face, which extends in the circumferential direction between an edge, or a vertex, having maximum height and an edge, or a joining surface with the pressure flank of the same tooth, having minimum height.

In the circumstance in which the gearshifting helping tooth has a top surface, the minimum height is measured between the bottom of the groove adjacent to the pressure flank of the tooth itself and the intersection of the top surface with the pressure flank. Such a minimum height is in any case greater than or equal to 90% of the radius of the pin of the transmission chain.

Preferably, the hooking tooth also comprises an outer face perpendicular to the axis of the toothed wheels and facing towards the toothed wheel having smaller diameter. The outer face forms, with the idle flank of the tooth, a hooking edge of the transmission chain.

Preferably, the hooking tooth comprises a first bevel formed on the outer face, between the top face and the pressure flank. The depth of the first bevel, with respect to the outer face, increases towards the pressure flank and is at its maximum at the join, or the edge, between the pressure flank and the top face. More preferably, the first bevel is defined by a concave surface.

The maximum height of the gearshifting helping tooth, measured with respect to the bottom of the groove adjacent to the pressure flank of the same tooth, is located at the intersection between the idle flank and the top face. The minimum height of the gearshifting helping tooth, measured from the bottom of the aforementioned groove, is greater than or equal to 2/3 of the maximum height of the same helping tooth.

Preferably, the mutual angular positioning of the wheels is selected so that, in the gearshifting sector, the hooking tooth of the toothed wheel having larger diameter is adjacent to the idle flank of the gearshifting helping tooth of the toothed wheel having smaller diameter.

Preferably, the hooking tooth of the toothed wheel having larger diameter is identical to the gearshifting helping tooth of the toothed wheel having smaller diameter.

Preferably, the gearshifting helping tooth also comprises an inner face, perpendicular to the axis of the toothed wheels and facing towards the toothed wheel having larger diameter. The inner face is tapered in the radial direction and has a second bevel that extends up to the idle vertex formed by the intersection between the inner face, the top face and the idle flank of the tooth. More preferably, the second bevel is defined by a flat triangular surface.

Hereafter, the characteristics of the group of toothed wheels that mainly simplify inner link upward gearshifting shall be described. Such characteristics can be present on the wheels independently from, or in combination with, the characteristics that promote outer link upward gearshifting.

In order to optimise inner link gearshifting, the toothed wheel having smaller diameter comprises a depressed tooth the maximum height of which is lower than the maximum height of the remaining teeth of the same toothed wheel. The tooth having lower height, i.e. the depressed tooth, allows the chain to pass from one toothed wheel to the other without undergoing excessive stretching along the way that leads to the same depressed tooth being passed over. In this way the chain goes onto the toothed wheel having larger diameter in phase to engage its teeth.

Preferably, the depressed tooth is beside the idle flank of the gearshifting helping tooth. The highest portion of the depressed tooth is adjacent, i.e. proximal, to the gearshifting helping tooth, so as to be able to effectively engage the chain during normal operation.

Preferably, on the aforementioned taper of the gearshifting helping tooth a third bevel is formed that extends until it intersects the pressure flank of the same tooth. More preferably, the second bevel and the third bevel intersect one another and intersect the taper and said top face, which do not intersect one another.

According to a preferred embodiment of the group of toothed wheels, the distance D is calculated between the centre of the groove adjacent to the idle flank of the hooking tooth of the toothed wheel having larger diameter and the centre of the groove adjacent to the idle flank of the depressed tooth of the toothed wheel having smaller diameter.

Preferably, the tooth adjacent to the idle flank of the hooking tooth of the toothed wheel having larger diameter is provided with a narrowing at the outer face, orientated perpendicular to the rotation axis and facing towards the toothed wheel having smaller diameter.

According to the preferred embodiment of the present invention, the toothed wheels of the group of wheels are sprockets.

Further characteristics and advantages of the sprocket and of the group of sprockets according to the present invention shall become clearer from the following description, made with reference to the attached drawings. In such drawings:

- figures 1, 2 and 3 are respective front, plan and rear views of a circular sector of a sprocket and of a group of sprockets according to the present invention;

- figures 4, 5 and 6 are respective front, plan and rear views of a first detail of the group of sprockets shown in figure 1;

- figure 7 is a plan view of a chain suitable for engaging a group of sprockets according to the present invention;

- figures 8 and 9 are respective front and rear views of a second detail of the group of sprockets shown in figure 1;

- figures 10, 11 and 12 are respective front, plan and rear views of further details of the group of sprockets shown in figure 1;

- figures 13, 14 and 15 are respective front, plan and rear views of a circular sector of a sprocket and of a group of sprockets according to the present invention, during an upward gearshifting step, in a first configuration;

- figure 16 is an enlarged view of a detail of figure 14;

- figures 17, 18 and 19 are respective front, plan and rear views of a circular sector of a sprocket and of a group of sprockets according to the present invention, during an upward gearshifting step, in a second configuration; and

- figure 20 is an enlarged view of a detail of figure 18.

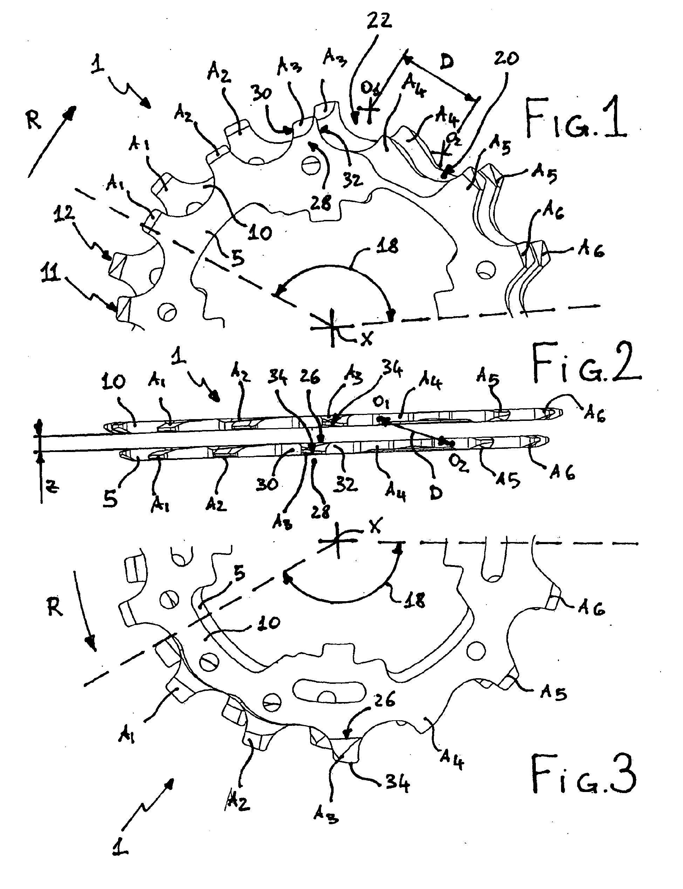

With reference to figures 1, 2 and 3, a group of toothed wheels **1** according to the present invention is shown. In general, the toothed wheels of the group 1 can be front crowns or rear sprockets of a bicycle. In particular, figures 1-20 show a group 1 of sprockets **5, 10**. It should be understood that the characteristics described in relation to the sprockets **5, 10** are in principle also applicable to crowns of bicycles.

The group **1** comprises at least one sprocket **5** having smaller diameter and at least one sprocket **10** having larger diameter arranged side-by-side along a common rotation axis **X.** In general, the group **1** can also comprise a larger number of sprockets, for example 5-7 sprockets, or even more, according to the final applications or the preferences of the user.

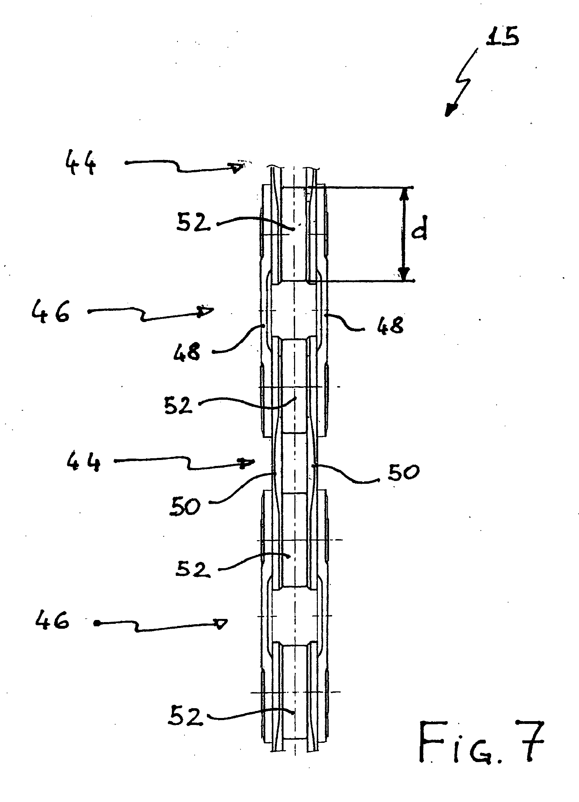

The sprockets **5** and **10** each comprise a succession of teeth **11** and **12** arranged on the radially outer periphery, alternating with grooves, for the functional engagement with a transmission chain **15** (figure 7). In general, the number of teeth **11** of the sprocket having smaller diameter **5** is less than the number of teeth **12** of the sprocket having larger diameter **10**. Preferably, the sprocket having larger diameter **10** comprises an extra tooth compared to the sprocket having smaller diameter **5.**

According to one of the preferred embodiments of the present invention, shown in figures 1-3, the teeth **12** of the sprocket having larger diameter **10** have an identical configuration to corresponding teeth **11** of the sprocket having smaller diameter **5,** i.e. the "homologous" teeth of the sprocket **5**. The pitch **P** between the consecutive teeth **11** and **12** in the two sprockets **5** and **10** is the same, and is equal to the pitch of the transmission chain **15.**

Each sprocket **5** or **10** of the group **1** comprises an upward "gearshifting sector" **18** at which, during gearshifting, the chain **15** extends between the sprocket having larger diameter **10** and the sprocket having smaller diameter **5**. In the gearshifting sector **18** there are specialised teeth **A1-A6,** specially shaped to simplify and promote gearshifting, i.e. to optimise the passage of the chain **15** from the sprocket having smaller diameter **5** to the sprocket having larger diameter **10**. Generally, the teeth of the sector **18** are referred to as "specialised" teeth for upward gearshifting.

Conventionally, the gearshifting sector **18** of each sprocket **5, 10** is defined by the first specialised tooth **A1** and by the last specialised tooth **A6**. The gearshifting sector **18** of the entire group **1** of sprockets is defined by the first specialised tooth **A1** and by the last specialised tooth **A6,** whether they belong to the sprocket **5** or to the sprocket **10**. Figures 1 and 3 show the limits of the gearshifting sector **18** of the group **1** of sprockets.

In practice, the gearshifting sector **18** is inside a circular sector of both of the sprockets **5** and **10**. In the rest of the present invention and in the claims, by the expression "gearshifting sector" **18** we shall refer to the gearshifting sector of the group 1 of sprockets.

In the gearshifting sector **18,** the crowns of teeth **11** and **12** of the sprockets **5, 10** comprise, in succession, the specialised teeth **A1, A2, A3, A4, A5, A6**. Figures 1 and 3 show the form of such a series in a front view, i.e. from the side of the sprocket **5,** and rear view, i.e. from the side of the sprocket **10**. The teeth **A1-A6** of the sprocket **5** are identical to the teeth **A1-A6,** respectively, of the sprocket **10**.

According to the present invention, the phasing between the teeth **A1-A6** of the sprocket having a smaller diameter **5** and the teeth **A1-A6** of the sprocket having a larger diameter **10,** i.e. the angular phase displacement between the homologous teeth **A1-A1, A2-A2, A3-A3, A4-A4, A5-A5, A6-A6** of the two sprockets **5, 10** in the gearshifting sector **18,** must not exceed a certain limit, expressed in terms of the distance **D** between a groove of the sprocket **5** and a groove of the sprocket **10**. In particular, the centre of a groove is defined as centre of curvature $O_1$, $O_2$, etc. (figure 1) of the circular portion of the pressure flank **30** of the tooth preceding that groove with respect to the direction **R** of rotation. The distance **D** between the centre of curvature of a groove **20** between two consecutive teeth of the sprocket having smaller diameter **5** and the centre of curvature of a groove **22** between two consecutive teeth of the sprocket having larger diameter **10,** in the gearshifting sector **18** of the group **1,** must satisfy the following relationship:

$$0.85 \cdot N \cdot P \leq D \leq N \cdot P,$$

where **N** is an integer number and **P** is the pitch of the group of sprockets **1**. Preferably $0.85 \cdot N \cdot P \leq D \leq 0.95 \, N \cdot P$. Even more preferably **N=2**.

In the embodiment shown in figures 1-3, the grooves **20** and **22** between which the distance **D** is measured are those between the teeth **A3** and **A4** of the sprocket having larger diameter **10** and the teeth **A4** and **A5** of the sprocket having smaller diameter **5.**

Let us consider the case in which the toothed wheels **5** and **10** are crowns, the centre of a groove is defined as the centre of curvature (not shown) of the circular portion of the pressure flank of the tooth following that groove with respect to the direction of rotation. Indeed, in the crowns the pressure flank is the flank preceding the tooth, and the idle flank is the one following the tooth with respect to the direction of rotation.

The distance **Z** (indicated in fig. 2) between the sprockets **5** and **10,** in the axial direction, is preferably less than 2.3 mm, more preferably less than 2 mm.

The following description refers in detail to the shape of the teeth of a sprocket **5** or **10** according to the present invention. With reference to the rotation axis **X** and to the direction of rotation **R,** common to the two sprockets **5, 10,** each tooth **11** or **12** is defined by an inner face **26,** orientated axially and facing towards the inside of the bicycle (visible in figure 3), an outer face **28,** orientated axially and facing towards the outside of the bicycle (visible in figure 1), a following flank **30,** orientated in the circumferential direction and following the tooth during the rotation of the sprocket **5** or **10** (on the left of each tooth in figure 1), a preceding flank **32** opposite the following flank (on the right of each tooth in figure 1), and a top face **34** orientated in the radial direction (visible in figure 2).

The specialised teeth of each sprocket **5** or **10** that allow gearshifting are the teeth **A3** and **A4,** whereas the teeth **A1, A2, A5** and **A6** are auxiliary teeth, which cooperate with the teeth **A3** and **A4** to optimise gearshifting. In particular, the tooth **A3** of the sprocket having smaller diameter **5** is the gearshifting helping tooth; the tooth **A3** of the sprocket having larger diameter **10** is the hooking tooth of the transmission chain **15.** The tooth **A4,** in both of the sprockets **5** and **10,** is the depressed tooth.

With particular reference to figure 3, the teeth **A5** and **A6,** identical to one another, are asymmetrical teeth, offset in the circumferential direction. During upward gearshifting, the teeth **A5** and **A6** of the sprocket having smaller diameter **5** allow the chain **15,** which is in a position not aligned with the sprockets **5, 10,** to leave the sprocket **5** without jamming.

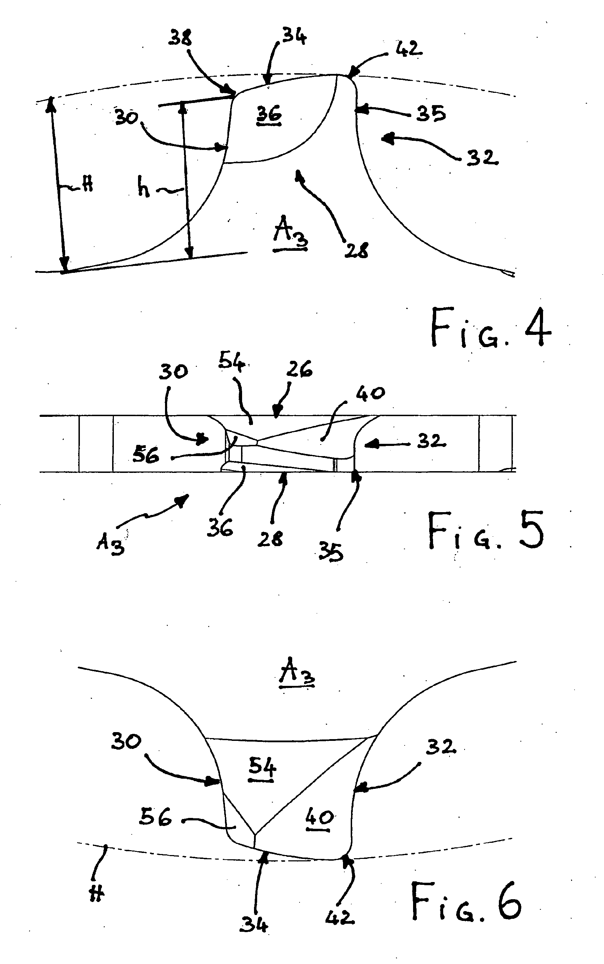

With reference to figures 4, 5 and 6, which respectively show a front, plan and rear view of a helping tooth **A3** of the upward gearshifting sector **18** of the group of sprockets **1,** the teeth **A3** have maximum height **H** equal to the height of the other teeth **11, 12,** however the height of the teeth **A3** decreases in the direction of the following flank **30.** Advantageously, the height of each tooth **A3,** measured from the bottom of the following groove, decreases in the direction of the following flank **30,** always being greater than or equal to 90% of the radius of the pin **52** of the chain **15.**

The tooth **A3** has maximum height **H** at the intersection between the preceding flank **32** and the top face **34.** The top face **34** is convex and joins to the following flank **30** in a non-tangent manner, i.e. with a sharp edge or, even better, with a join having a small radius of curvature. In particular, the substantially radial extension of the following flank **30** opposes the substantially circumferential extension of the face **34.** This characteristic allows the following flank **30** to be made with a height sufficient to support in abutment a pin **52** of the chain **15,** which during normal operation of the bicycle transmission transmits torque.

Figure 7 is a plan view of a standard chain **15,** suitable for engaging the group of sprockets **1,** which comprises inner links **44** alternating with outer links **46.** Each outer link **46** consists of a pair of interfacing plates **48** that are grooved apart, connected at their ends and on the inner faces to a pair of plates **50.** The plates **50** form the inner links **44.** The distance between centres between the links **44** is less than the distance between centres between the outer links **46,** but sufficient to house a tooth **11** and **12** of a sprocket **5, 10.** The plates **48** and **50** are kept distant apart by pins 52, which during normal operation of the transmission go into abutment against the teeth **11, 12** pulling them into rotation or being pulled by them into rotation. The diameter **d** of the pins **52** is standard and can therefore be taken as reference to calculate the height of the tooth **A3.**

In particular, the minimum height **h** of the tooth **A3** for helping gearshifting, measured between the bottom of the following groove and the edge or the join **38** between the following flank **30** and the top face **34,** is greater than or equal to **0.9·(d/2),** i.e. it is greater than or equal to 90% of the radius of the pin **52.** More preferably **h ≥ (2/3·H),** i.e. the minimum height **h** is greater than or equal to 2/3 of the maximum height **H** of the tooth **A3,** which is the height of the preceding vertex **42.**

Referring once again to figures 4, 5 and 6, the tooth **A3** for helping gearshifting comprises an edge **35** having the function of lifting the chain **15** in the radial direction in the gearshifting step. During gearshifting, i.e. when the chain **15** is shifted with respect to the sprocket **5,** the lifting edge **35,** defined by the intersection between the outer face **28** and the preceding flank **32,** acts as a ramp for a link of the chain **15,** which is lifted towards the top face **34.**

The tooth **A3** also comprises a first bevel **36,** formed on the outer face **28,** that extends between the following vertex **38,** defined by the intersection between the outer face **28,** the top face **34** and the following flank **30.** The depth of the first bevel **36** increases proceeding from the outer face **30** towards the following vertex **38.** Preferably, the first bevel **36** is defined by a concave surface.

Preferably, the tooth **A3** also comprises a second bevel **40,** formed on the inner face **26,** that extends between a taper **54** and the preceding vertex **42** formed by the intersection between the inner face **26,** the top face **34** and the preceding flank **32.** Preferably, the second bevel **40** is defined by a substantially triangular flat surface. The taper **54** extends in the radial direction and positively contributes to the engagement of the chain **15** in normal operation.

More preferably, a third bevel **56,** for example triangular, is formed on the inner face **26** between the taper **54,** the second bevel **40** and the following flank **30.**

As shown in detail in figures 5 and 6, the bevels **40** and **56** join together before reaching the top face **34.** The bevels **40** and **56** globally thin out the most radially outer part of the tooth **A3** on the side of the inner face **26,** avoiding an excessive reduction of the central body of the tooth **A3.** Alternatively, the bevels **56** and **40** can also be made as a single bevel that is deeper at the following and preceding vertices of the tooth **A3** and less deep at the centre of the tooth.

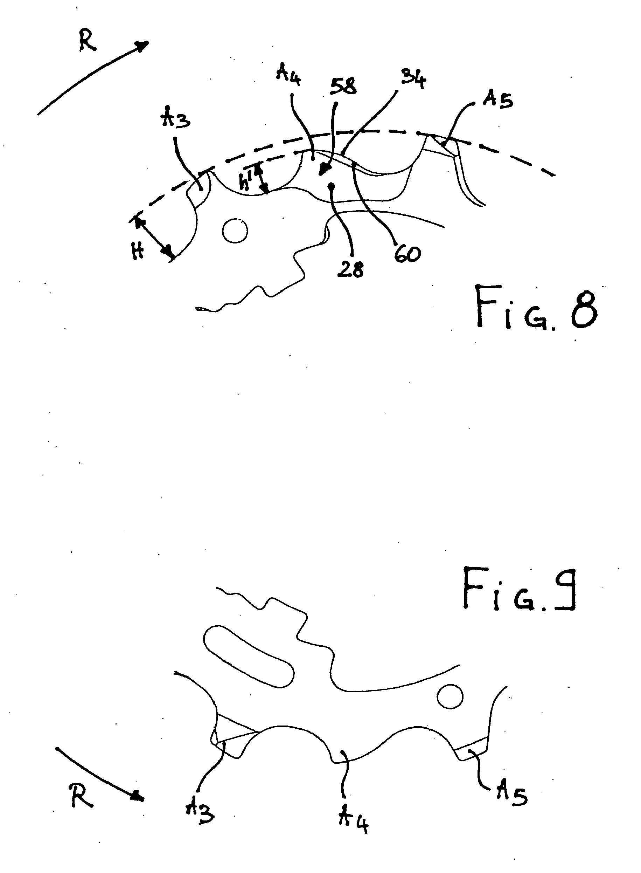

Figures 8 and 9 respectively show a front view and a rear view of the depressed tooth **A4** of the upward gearshifting sector **18.** The maximum height **h'** of the tooth **A4** is less than the maximum height **H** of the other teeth **11, 12, A1-A6.** The highest part of the tooth **A4** is the one closest to the following tooth **A3.** Moreover, the maximum height **h'** of the depressed tooth **A4** is preferably greater than or equal to 90% of the radius of the pin **52,** i.e.

$$h' \geq 0.9*(d/2),$$

where **d** is the standard diameter of the pin **52** of the chain **15** (figure 7).

The following flank **30** of the depressed tooth **A4** is defined by a concave surface suitable for coupling with the pin **52** of the chain **15.** Preferably, the tooth **A4** comprises a narrowing **58** on the outer face **28.** The edge between the outer face **28** and the top face **34** is removed with a bevel **60.** Figure 1 shows the centre of curvature $O_2$ of the groove between the teeth **A4** and **A5** of the sprocket having smaller diameter **5,** i.e. the centre of curvature $O_2$ of the groove preceding the tooth **A4** of the sprocket **5,** and the centre of curvature $O_1$ of the groove between the teeth **A3** and **A4** of the sprocket having larger diameter **10,** i.e. the centre of curvature $O_1$ of the groove following the tooth **A4** of the sprocket **10.**

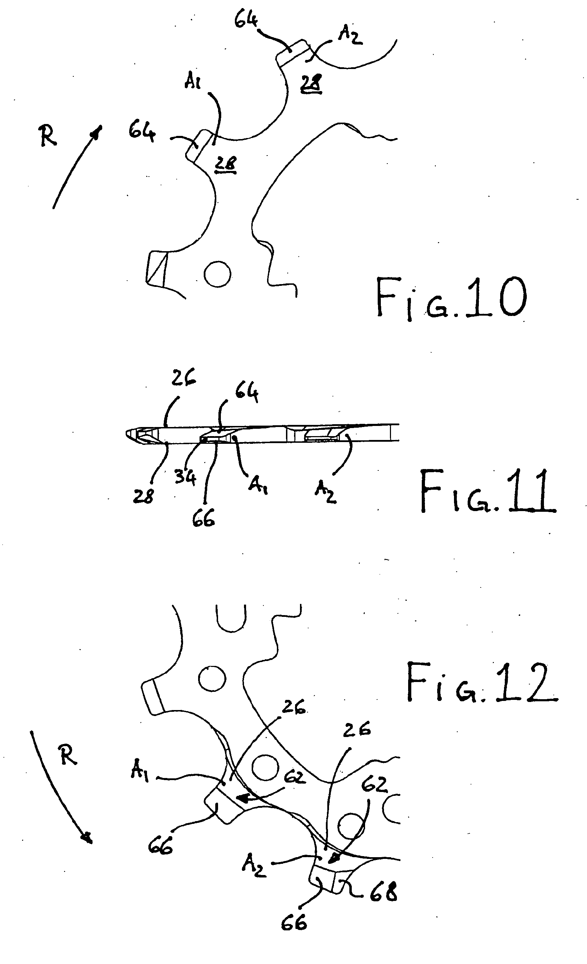

Figures 10, 11 and 12 are respective front, plan and rear views of further auxiliary teeth **A1, A2** of the upward gearshifting sector **18** of the group of sprockets **1** of figure 1. The auxiliary teeth **A1** and **A2** are almost identical to one another and when they are located on the sprocket having larger diameter **10** they have the task of receiving the chain **15** during gearshifting.

Before gearshifting is complete, the chain **15** is not yet completely parallel to the sprockets **5, 10.** In order to avoid harmful mechanical interference, both of the teeth **A1** and **A2** have a narrowing **62** on the inner face **26.** The top portion of the teeth **A1** and **A2** is tapered on the outer face **28,** where a bevel **64** is formed facing in the radial direction, which is substantially rectangular. On the inner face **26** there is a rhomboidal bevel **66,** facing towards the preceding top end of the tooth. The tooth **A2** comprises a further top bevel **68** that extends forwards with respect to the direction of rotation **R** and increases the depth of the tapering bevel **66.**

In the embodiment in figure 11 the depth of the bevels on the inner and outer faces **26, 28** is such that the top face **34** of the teeth **A1** and **A2** is moved farther towards the outer face **28.** This characteristic also promotes the engagement of the chain **15** when, during gearshifting, it is not yet perfectly aligned with the arrival sprocket **10.**

The special shape of the teeth **A1** and **A2,** described above and shown in the figures, enormously facilitates the engagement of the chain **15** by the sprocket **10.**

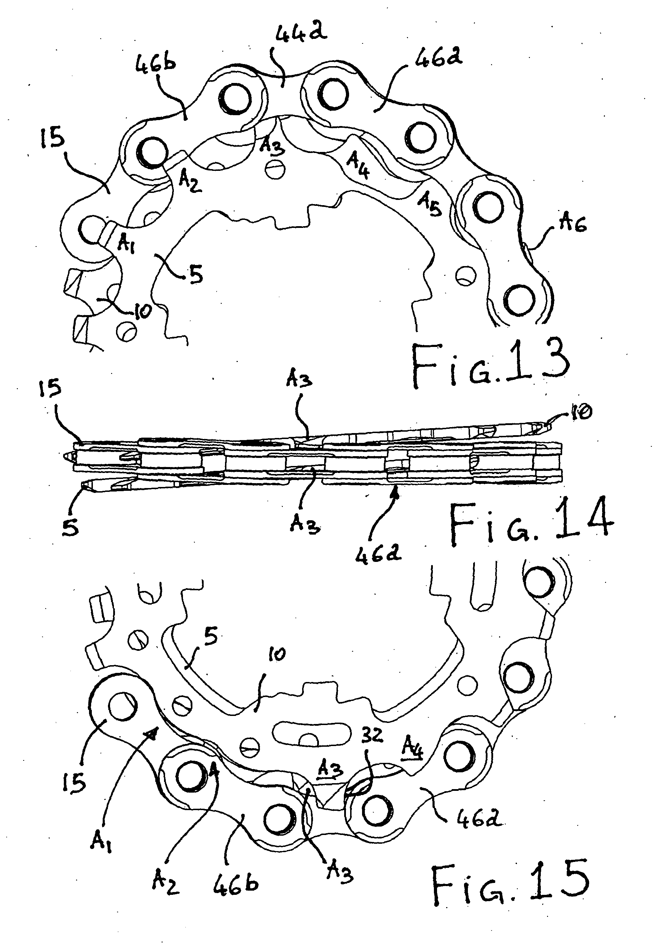

Figures 13, 14 and 15 illustrate the operation of the group of sprockets 1 according to the invention, during outer link gearshifting. The outer link **46a** is the first to disengage the sprocket having a smaller diameter **5.** The inner link **44a** passes over the gearshifting helping tooth **A3** without interfering with it; the tooth **A3** on the other hand provides a support for the outer link **46b,** which is thus already situated at the height of the sprocket having larger diameter **10.**

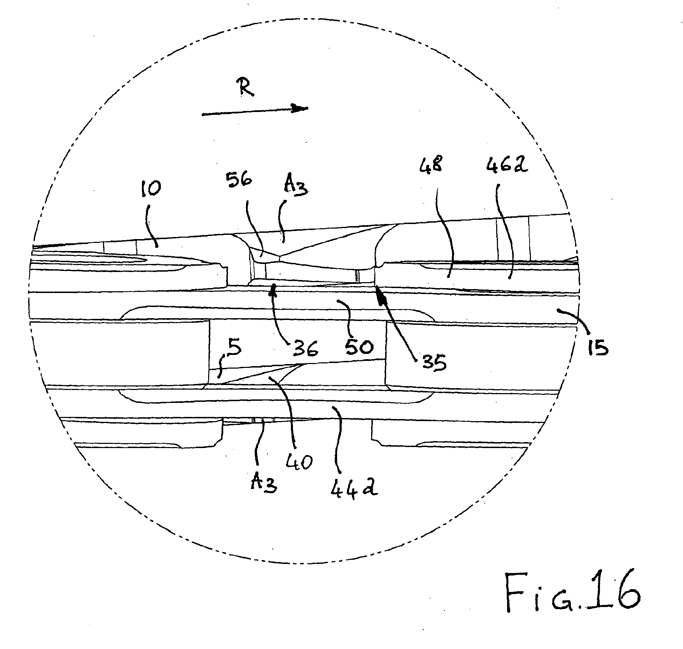

Figure 16 shows in detail, and with an enlarged scale with respect to figure 14, the inner link **44a** at the moment when it is located exactly above the gearshifting helping tooth **A3** of the sprocket having smaller diameter **5.** The plate **48** of the outer link **46a** is hooked by the edge **35** of the tooth **A3** of the sprocket having larger diameter **10** (the edge **35** goes into abutment against the link **46a,** pulling it). Thanks to this hooking effect, the chain **15** is immediately pulled towards the sprocket having larger diameter **10.**

Going back to figure 15, it can be seen that the preceding flank **32** of the tooth **A3** of the sprocket having larger diameter **10,** and in particular its lifting edge **35,** provides a support for the outer link **46a** and causes it to be lifted from the sprocket having smaller diameter **5,** in the radial direction. A plate **50** of the inner link **44a** moves at the side of the tooth **A3** of the sprocket **10** without interfering with it, thanks to the presence of the concave bevel **36.**

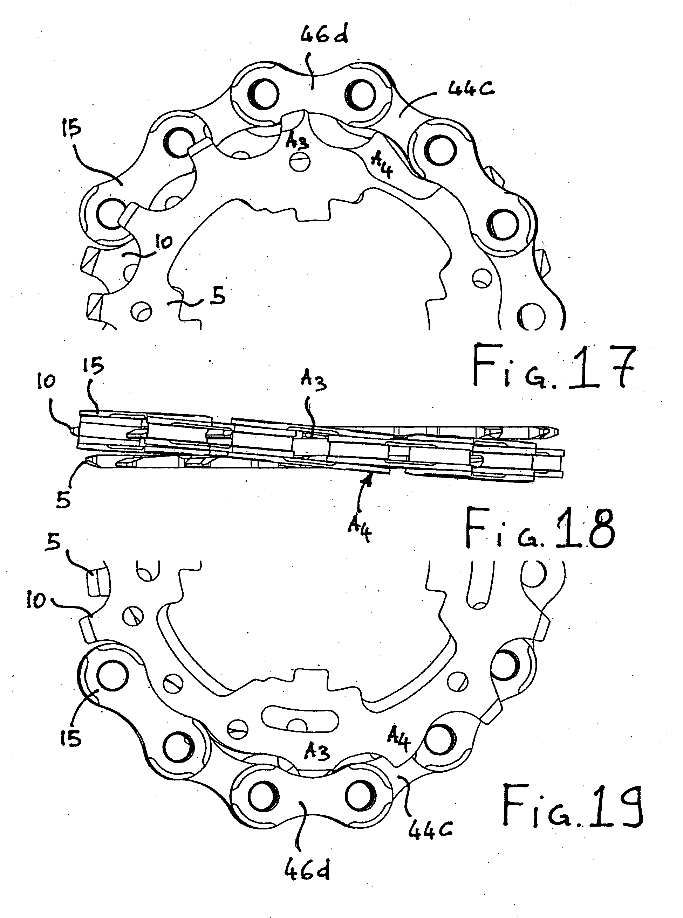

Figures 17, 18 and 19 illustrate the operation of the group of sprockets 1 according to the invention, during inner link gearshifting. The first link of the chain **15** that disengages the sprocket **5** is the inner link **44c,** which passes over the depressed tooth **A4,** resting upon it.

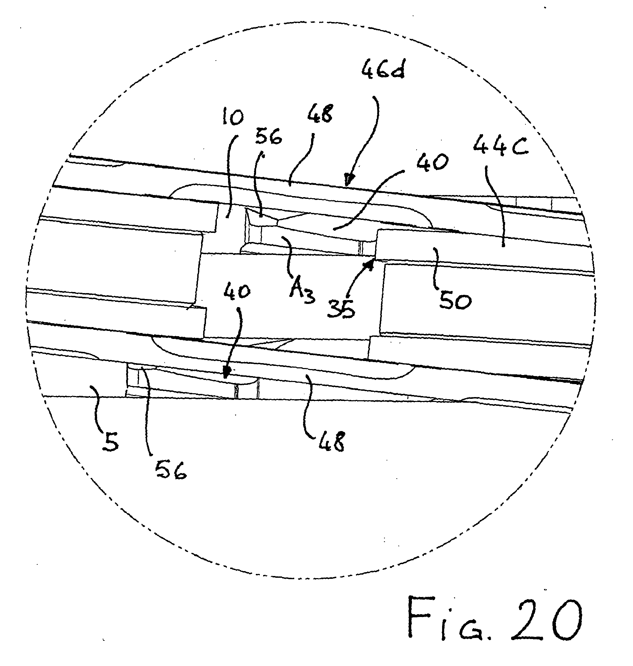

The action of the tooth **A3** of the sprocket **10** is illustrated in detail and in enlarged scale in figure 20. The hooking edge **35** goes into abutment against the plate **50** of the inner link **44c.** The preceding flank **32** of the tooth **A3** of the sprocket **10** provides a support for the inner link **44c** of the chain **15** and causes it to be lifted from the sprocket **5,** in the radial direction (not shown).

The plates **48** of the outer link **46d** do not interfere with the teeth **A3** of the two sprockets **5** and **10** thanks to the presence of the triangular bevels **40.** The presence of the bevel **56** further contributes to preventing interference.

In the group of sprockets **1** of the present invention, both in the case of inner link gearshifting and in the case of outer link gearshifting, the edge **35** of the tooth **A3** acts as hooking edge of the pin **52** and the preceding face **32** acts as support surface for lifting the links. Alternatively, the perimeter edge of the outer face **28** of the tooth **A3** can be configured as a hooking edge.

Preferably the sprockets **5** and **10** are identical in the shape of the teeth **11, 12.** In this way, both of the sprockets **5** and **10** can act as a sprocket having smaller diameter or as a sprocket having larger diameter in a group containing more than two sprockets. It shall be clear to the man skilled in the art that, in this circumstance, the sprocket with minimum diameter of a group of sprockets **1** can lack the characteristics to be used for downward gearshifting and the sprocket with maximum diameter can lack the characteristics to be used for upward gearshifting. Moreover, wishing to allow the group **1** exclusively inner link gearshifting, the relative sprockets **5, 10,** etc. can lack the characteristics to be used for outer link gearshifting, and vice-versa.

The sprocket and the group of sprockets **1** according to the present invention allow quick and precise gearshifting, with minimum risk of interruption in the transmission of torque to the rear wheel of the bicycle.

The portion of chain **15** that is moved onto the sprocket having larger diameter **10** is immediately in phase with the teeth **A1-A6** of such a sprocket and can immediately transmit torque without idling of the group **1**.

**Claims**

1. Toothed wheel (5) for a chain transmission system for a bicycle, intended to be coupled with at least one other toothed wheel (10) in a group (1) of toothed wheels rotating as a unit, comprising a plurality of teeth (11) that follow one another on the radially outer periphery of the toothed wheel (5), alternating with grooves, wherein each tooth (11) has a thickness, a width and a height (H, h') and has an idle flank (32), passive in the transmission of torque with a bicycle chain (15), and a pressure flank (30), active in the transmission of torque with the chain itself, in which said pressure flank (30), which extends in circumferential direction, is concave for the engagement with a pin (52) of the chain (15), **characterised in that** it comprises at least one tooth (A3) for helping gearshifting the height of which, measured from the bottom of an adjacent groove, decreases in the direction of the pressure flank (30), in any case being greater than or equal to 90% of the radius of the pin (52).

2. Toothed wheel (5) according to claim 1, **characterised in that** said tooth (A3) for helping gearshifting also comprises a convex top face (34), which extends in the circumferential direction between an edge, or a vertex, having maximum height (H) and an edge, or a joining surface with said pressure flank (30), having minimum height (h).

3. Toothed wheel (5) according to claim 1 or claim 2, **characterised in that** the minimum height (h) of said tooth (A3) for helping gearshifting, measured from the bottom of the groove adjacent to the pressure flank (30) of the tooth (A3) itself, is greater than or equal to 90% of the radius of the pin (52) of the chain.

4. Toothed wheel (5) according to any one of the previous claims 1-3, **characterised in that** said tooth (A3) for helping gearshifting also comprises an outer face (28), perpendicular to the axis of the toothed wheel (5) and facing towards a toothed wheel having smaller diameter, which forms with said idle flank (32) a hooking edge (35) of said chain (15).

5. Toothed wheel (5) according to one of claims 2-4, **characterised in that** said tooth (A3) for helping gearshifting has a maximum height (H), measured with respect to the bottom of the groove adjacent to the pressure flank (30), at the intersection between the idle flank (32), the top face (34) and the outer face (28).

6. Toothed wheel (5) according to claim 5, **characterised in that** the minimum height (h) of the tooth (A3) for helping gearshifting, measured from the bottom of said groove, is greater than or equal to 2/3 of the maximum height (H) of the same tooth (A3), measured from the bottom of the same groove.

7. Toothed wheel (5) according to any one of the previous claims 4-6, **characterised in that** said tooth (A3) for helping gearshifting also comprises a first bevel (36) formed on the outer face (28) between the top face (34) and the pressure flank (30), in which the depth of said first bevel (36) with respect to the outer face (28) increases towards said pressure flank (30), and is at its maximum at the join or the edge between the pressure flank (30) and the top face (34).

8. Toothed wheel (5) according to claim 7, **characterised in that** said first bevel (36) is defined by a concave surface.

9. Toothed wheel (5) according to any one of the previous claims 4-8, **characterised in that** said tooth (A3) for helping gearshifting also comprises an inner face (26), opposite said outer face (28) and tapered (54) in the radial direction, on which a second bevel (40) is formed that extends up to the idle vertex (42) formed by the intersection between the inner face (26), the top face (34) and the idle flank (32).

10. Toothed wheel (5) according to claim 9, **characterised in that** said second bevel (40) is defined by a flat triangular surface.

11. Toothed wheel (5) according to claim 9 or claim 10, **characterised in that** on said taper (54) a third bevel (56) is formed that extends up to the point of intersecting said pressure flank (30).

12. Toothed wheel (5) according to claim 11, **characterised in that** said second bevel (40) and said third bevel (56) intersect one another and intersect said taper (54) and said top face (34), which do not intersect one another.

13. Toothed wheel (5) according to any one of the previous claims 1-12, **characterised in that** said tooth (A3) for helping gearshifting is flanked, on the side of the idle flank (32), by a depressed tooth (A4) the maximum height (h') of which is less than the maximum height (H) of the remaining teeth (11) of the same toothed wheel (5) and the highest portion of which is proximal to the tooth (A3) for helping gearshifting.

14. Toothed wheel (5) according to any one of the previous claims 1-13, **characterised in that** it is a sprocket.

15. Group (1) of toothed wheels for a chain transmission system of a bicycle, comprising at least one toothed wheel having smaller diameter (5) and at least one toothed wheel having larger diameter (10), fixed with respect to one another and rotatable around a common axis (X), intended to be selectively engaged by a transmission chain (15),

- wherein said toothed wheels (5, 10) comprise, on their own periphery, a plurality of teeth (11, 12) arranged circumferentially and alternating with grooves, each tooth (11) having a thickness, a width and a height (H, h') and having an idle flank (32), passive in the transmission of torque with a bicycle chain (15), and a pressure flank (30), active in the transmission of torque with the same chain (15),
- wherein said toothed wheel having larger diameter (10) comprises at least one hooking tooth (A3) of the transmission chain (15), suitable for engaging and holding a portion of the transmission chain (15) that, during gearshifting, extends between the toothed wheel having smaller diameter (5) and the toothed wheel having larger diameter (10) in a circular sector of the group of toothed wheels (1), defined as gearshifting sector (18), and
- wherein in said gearshifting sector (18), the distance (D) between the centre of a groove between two consecutive teeth (A1-A2; A2-A3; A3-A4) of the toothed wheel having smaller diameter (5) and the centre of a groove between two consecutive teeth (A2-A3; A3-A4; A4-A5) of the toothed wheel having larger diameter (10) is within the range:

$$0,85 \cdot N \cdot P \leq D \leq N \cdot P,$$

in which N is an integer number and P is the pitch of the group of toothed wheels (1).

16. Group (1) of toothed wheels according to claim 15, **characterised in that $0,85 \cdot N \cdot P \leq D \leq 0,95 \cdot N \cdot P.$**

17. Group (1) of toothed wheels according to claim 15 or claim 16, **characterised in that** N=2.

18. Group (1) of toothed wheels according to any one of claims 15-17, **characterised in that** said toothed wheel having larger diameter (10) has one extra tooth compared to said toothed wheel having smaller diameter (5).

19. Group (1) of toothed wheels according to any one of claims 15-18, **characterised in that** at least said toothed wheel having smaller diameter (5) comprises at least one tooth (A3) for helping gearshifting the height of which, measured from the bottom of the groove adjacent to the pressure flank (30), decreases in the direction of said pressure flank (30).

20. Group (1) of toothed wheels according to claim 19, **characterised in that** the height of said tooth (A3) is greater than or equal to 90% of the radius of the pin (52) of the transmission chain (15).

21. Group (1) of toothed wheels according to claim 19 or claim 20, **characterised in that** said tooth (A3) for helping gearshifting also comprises a convex top face (34), which extends in the circumferential direction between an edge, or a vertex, having maximum height (H) and an edge, or a joining surface with said pressure flank (30), having minimum height (h).

22. Group (1) of toothed wheels according to claim 21, **characterised in that** the minimum height (h) of said tooth (A3) for helping gearshifting, measured between the bottom of the groove adjacent to the pressure flank of the tooth (A3) itself and the intersection of said top surface (34) with the pressure flank (30), is greater than or equal to 90% of the radius of the pin (52) of the transmission chain (15).

23. Group (1) of toothed wheels according to any one of the previous claims 15 - 22, **characterised in that** said hooking tooth (A3) also comprises an outer face (28), perpendicular to the axis (X) of the toothed wheels and facing towards the toothed wheel having smaller diameter (5), which forms, with said idle flank (32), a hooking edge (35) of said transmission chain (15).

24. Group (1) of toothed wheels according to claim 23, **characterised in that** said hooking tooth (A3) also comprises a first bevel (36) formed on the outer face (28) between the top face (34) and the pressure flank (30), in which the depth of said first bevel (36) with respect to the outer face (28) increases towards said pressure flank (30), and is at its maximum at the join or the edge between the pressure flank (30) and the top face (34).

25. Group (1) of toothed wheels according to claim 24, **characterised in that** said first bevel (36) is defined by a concave surface.

26. Group (1) of toothed wheels according to one of claims 19 - 25, **characterised in that** said tooth (A3) for helping gearshifting has a maximum height (H), measured with respect to the bottom of the groove adjacent to the pressure flank of the tooth A3) itself, at the intersection between the idle flank (32) and the top face (34) .

27. Group (1) of toothed wheels according to claim 26, **characterised in that** the minimum height (h) of the tooth (A3) for helping gearshifting, measured from the bottom of said groove, is greater than or equal to 2/3 of the maximum height (H) of the same tooth (A3).

28. Group (1) of toothed wheels according to any one of claims 19 - 27, **characterised in that,** in the gearshifting sector, said hooking tooth (A3) of the toothed wheel having larger diameter (10) is adjacent to the idle flank of said tooth (A3) for helping gearshifting of the toothed wheel having smaller diameter (5) .

29. Group (1) of toothed wheels according to any one of claims 19-28, **characterised in that** the hooking tooth (A3) of the toothed wheel having larger diameter (10) is identical to the tooth (A3) for helping gearshifting of the toothed wheel having smaller diameter (5).

30. Group (1) of toothed wheels according to any one of the previous claims 19 - 29, **characterised in that** said tooth (A3) for helping gearshifting also comprises an inner face (26), perpendicular to the axis (X) of the toothed wheels (5, 10) and facing towards the toothed wheel having larger diameter (10), tapered (54) in the radial direction, on which a second bevel (40) is formed that extends up to the idle vertex (42) formed by the intersection between the inner face (26), the top face (34) and the idle flank (32).

31. Group (1) of toothed wheels according to claim 30, **characterised in that** said second bevel (40) is defined by a flat triangular surface.

32. Group (1) of toothed wheels according to any one of the previous claims 15 - 31, **characterised in that** said toothed wheel having smaller diameter (5) comprises a depressed tooth (A4) the maximum height (h') of which is smaller than the maximum height (H) of the remaining teeth (11) of the same toothed wheel (5).

33. Group (1) of toothed wheels according to claim 32 dependent upon claim 19, **characterised in that** said depressed tooth (A4) is beside the idle flank of said tooth (A3) for helping gearshifting, and **in that** the highest portion of the depressed tooth (A4) is adjacent to the tooth (A3) for helping gearshifting.

34. Group (1) of toothed wheels according to claim 32 or claim 33, when dependent upon claims 30 or 31, **characterised in that** on said taper (54) a third bevel (56) is formed that extends until it intersects said pressure flank (30).

35. Group (1) of toothed wheels according to claim 34, **characterised in that** said second bevel (40) and said third bevel (56) intersect one another and intersect said taper (54) and said top face (34), which do not intersect one another.

36. Group (1) of toothed wheels according to any one of the previous claims 30 - 35, **characterised in that** said distance (D) is calculated between the centre (O1) of the groove adjacent to the idle flank of the hooking tooth (A3) of the toothed wheel having larger diameter (10) and the centre (02) of the groove adjacent to the idle flank of the depressed tooth (A4) of the toothed wheel having smaller diameter (5).

37. Group (1) of toothed wheels according to any one of claims 15-36, **characterised in that** the tooth (A4) adjacent to the idle flank of the hooking tooth (A3) of the toothed wheel having larger diameter (10) is provided having narrowing at the outer face, orientated perpendicular to said rotation axis (X) and facing towards said toothed wheel having smaller diameter (5).

38. Group (1) of toothed wheels according to any one of claims 15 to 37, **characterised in that** said toothed wheels (5, 10) are sprockets.

FIG.1

FIG.2

FiG.3

Fig. 4

Fig. 5

Fig. 6

15

44

52

46

48

48

d

52

44

50

50

52

46

52

52

FiG. 7

Fig. 8

Fig. 9

FIG.10

FIG.11

FIG.12

Fig.13

Fig.14

Fig.15

Fig.16

Fig.17

Fig.18

Fig.19

FIG. 20

Europäisches
Patentamt

European
Patent Office

Office européen
des brevets

# EUROPEAN SEARCH REPORT

Application Number

EP 08 42 5244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 073 151 A (NAGANO MASASHI [JP]) 17 December 1991 (1991-12-17) | 1-7,14 | INV. B62M9/10 |
| A | * figures 2,3 * | 15 | |
| X,D | US 6 139 456 A (LII JIA-MIIN [TW] ET AL) 31 October 2000 (2000-10-31) * figures 1,2A,2B * | 1,3,4,7, 13,14 | |
| X | EP 1 767 449 A (WICKLIFFE CHRISTOPHER ALAN [US]) 28 March 2007 (2007-03-28) * figures 6,7 * | 1-6,14 | |
| X | US 5 830 096 A (SCHMIDT FRANK [DE] ET AL) 3 November 1998 (1998-11-03) * figures 4,5 * | 1,3,4,7, 14 | |
| A | EP 0 765 802 A (SHIMANO KK [JP]) 2 April 1997 (1997-04-02) * column 4, last paragraph - column 5, paragraph 1 * * column 6, line 19 - line 20 * | 15,18 | |
| | | | TECHNICAL FIELDS SEARCHED (IPC) |
| A | EP 0 479 032 A (MAEDA IND [JP] SAKAE CO LTD [JP]) 8 April 1992 (1992-04-08) * column 4, line 19 - line 39 * | 15 | B62M F16H |

The present search report has been drawn up for all claims

| Place of search | Date of completion of the search | Examiner |
|---|---|---|
| Munich | 30 December 2008 | Yildirim, Ismet |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

Application Number

EP 08 42 5244

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 08 42 5244

---

The Search Division considers that the present European patentapplication does not comply with the requirements of unity of invention and relates to severalinventions or groups of inventions, namely:

1. claims: 1-14

   Toothed wheel having at least one tooth the height of which decreases in the direction of the pressure flank, being in any case greater than or equal 90% of the radius of the pin of the chain.
   ---

2. claims: 15-38

   Group of toothed wheels comprising at least one toothed wheel having smaller diameter and at least one toothed wheel having larger diameter fixed with respect to one another and rotatable around a common axis wherein in a gearshifting sector the distance between the centre of a groove between two consecutive teeth of the toothed wheel having smaller diameter and the centre of a groove between two consecutive teeth of the toothed wheel having larger diameter is within the range 0,85NP <= D <= NP, where N is an integer and P is the pitch of the toothed wheels.
   ---

**ANNEX TO THE EUROPEAN SEARCH REPORT
ON EUROPEAN PATENT APPLICATION NO.**                EP 08 42 5244

This annex lists the patent family members relating to the patent documents cited in the above-mentioned European search report.
The members are as contained in the European Patent Office EDP file on
The European Patent Office is in no way liable for these particulars which are merely given for the purpose of information.

30-12-2008

| Patent document cited in search report | | Publication date | Patent family member(s) | | Publication date |
|---|---|---|---|---|---|
| US 5073151 | A | 17-12-1991 | DE | 3936921 A1 | 10-05-1990 |
| | | | FR | 2638702 A1 | 11-05-1990 |
| | | | IT | 1237124 B | 18-05-1993 |
| | | | JP | 2127185 A | 15-05-1990 |
| US 6139456 | A | 31-10-2000 | NONE | | |
| EP 1767449 | A | 28-03-2007 | NONE | | |
| US 5830096 | A | 03-11-1998 | AT | 223830 T | 15-09-2002 |
| | | | DE | 19606667 A1 | 28-08-1997 |
| | | | EP | 0791533 A2 | 27-08-1997 |
| EP 0765802 | A | 02-04-1997 | CN | 1149112 A | 07-05-1997 |
| | | | DE | 69603136 D1 | 12-08-1999 |
| | | | DE | 69603136 T2 | 28-10-1999 |
| | | | JP | 3562883 B2 | 08-09-2004 |
| | | | JP | 9095285 A | 08-04-1997 |
| | | | TW | 390336 Y | 11-05-2000 |
| | | | US | 6102821 A | 15-08-2000 |
| EP 0479032 | A | 08-04-1992 | DE | 69124901 D1 | 10-04-1997 |
| | | | DE | 69124901 T2 | 19-06-1997 |
| | | | US | 5162022 A | 10-11-1992 |

For more details about this annex : see Official Journal of the European Patent Office, No. 12/82

**EP 2 108 579 A1**

## REFERENCES CITED IN THE DESCRIPTION

### Patent documents cited in the description

- US 6139456 A